(19) **Europäisches Patentamt / European Patent Office / Office européen des brevets**

(11) **EP 2 815 281 B1**

(12) **FASCICULE DE BREVET EUROPEEN**

(45) Date de publication et mention
de la délivrance du brevet:
**08.08.2018 Bulletin 2018/32**

(21) Numéro de dépôt: **13710450.1**

(22) Date de dépôt: **12.02.2013**

(51) Int Cl.:
*G03H 1/08* (2006.01)    *G03H 1/22* (2006.01)

(86) Numéro de dépôt international:
**PCT/FR2013/050284**

(87) Numéro de publication internationale:
**WO 2013/121140 (22.08.2013 Gazette 2013/34)**

(54) **PROCÉDÉ DE CODAGE DE MOTIF HOLOGRAPHIQUE, DISPOSITIF DE CODAGE ET PROGRAMME D'ORDINATEUR CORRESPONDANTS**

VERFAHREN ZUR CODIERUNG EINES HOLOGRAPHISCHEN MUSTERS UND ZUGEHÖRIGE CODIERUNGSVORRICHTUNG UND COMPUTERPROGRAMM

METHOD FOR ENCODING A HOLOGRAPHIC PATTERN, AND CORRESPONDING ENCODING DEVICE AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.02.2012 FR 1251402**

(43) Date de publication de la demande:
**24.12.2014 Bulletin 2014/52**

(73) Titulaire: **Orange**
**75015 Paris (FR)**

(72) Inventeur: **GIOIA, Patrick**
**F-35530 Servon Sur Vilaine (FR)**

(56) Documents cités:
- **EMMANOUIL DARAKIS ET AL: "Compression of digital hologram sequences using MPEG-4", PROCEEDINGS OF SPIE, 1 janvier 2009 (2009-01-01), pages 735811-735811-8, XP055032800, DOI: 10.1117/12.820632 cité dans la demande**
- **LE THANH BANG ET AL: "Compression of digital hologram for 3D object using wavelet-bandelets transform", PROCEEDINGS OF SPIE, 1 janvier 2011 (2011-01-01), pages 795704-1, XP055032803, ISSN: 0277-786X, DOI: 10.1117/12.873486**

EP 2 815 281 B1

**Description**

Domaine de l'invention

La présente invention se rapporte de manière générale au domaine du traitement d'images, et plus précisément au codage d'images en trois dimensions (3D) et de séquences d'images en trois dimensions.

De façon plus particulière, la présente invention concerne le codage d'au moins un motif holographique sur lequel est enregistré un signal lumineux représentatif de la lumière reçue par au moins un objet en perspective dans une scène.

L'invention peut notamment, mais non exclusivement, s'appliquer au codage vidéo mis en oeuvre dans les codeurs vidéo actuels et de leurs amendements (MPEG, H.264, H.264 SVC, H.264 MVC, etc) ou à venir (ITU-T/VCEG (H.265) ou ISO/MPEG (HEVC)), et au décodage correspondant.

Art antérieur

De façon connue en soi, un motif holographique est le résultat d'un procédé holographique qui consiste à enregistrer un front d'onde lumineux émanant d'une scène ou d'un objet en imprimant la valeur de ce front d'onde de type monochromatique sur une plaque semi-transparente. Une telle impression est rendue possible en éliminant les variations temporelles de la phase du front d'onde lumineux par interférence avec un front d'onde lumineux de référence ayant la même fréquence que ledit front d'onde lumineux.

Le motif holographique ainsi créé est une image monochromatique comportant des détails de l'ordre de la longueur d'onde du front d'onde lumineux émanant de la scène ou de l'objet. Cette image peut être modélisée comme la transformée de Fresnel du front d'onde émanant de la scène ou de l'objet, transformée qui a pour propriété de disperser les détails fréquentiels spatiaux. L'information dans un motif holographique est donc très mal localisée, et se prête donc mal aux codages classiques.

Un premier exemple de codage de tels motifs est décrit dans le document E. Darakis, T. Naughton, "Compression of Digital Hologram Sequence Using MPEG-4", Proc. SPIE vol. 7358, 2009. Dans ce document, il est procédé au codage d'une trame contenant un ensemble de motifs holographiques indexés par le temps, ladite trame définissant ainsi une vidéo holographique. Au même titre qu'une image d'une séquence vidéo, chaque motif de la trame est placé successivement en entrée d'un codeur vidéo conforme au standard MPEG-4 de façon à subir un codage par blocs selon un schéma prédictif par exploitation des redondances spatiales entre les motifs (codage Intra) ou par exploitation des redondances temporelles entre les motifs (codage Inter).

Un deuxième exemple de codage de tels motifs est décrit dans le document M. Liebling, M. Unser, "Fresnelets : New Multiresolution Wavelet Bases for Digital Holography", IEEE Trans. Image Processing, Vol 12, No1, January 2003. Comme dans le document précédent, il est procédé au codage d'une trame contenant un ensemble de motifs holographiques indexés par le temps, ladite trame définissant ainsi une vidéo holographique. Chaque motif de la trame est modélisé par une fonction à laquelle sont appliqués des bancs de filtres de façon à obtenir une décomposition dans une base de fonctions donnée, par exemple des ondelettes.

Un inconvénient de tels exemples de codage de motifs holographiques est que ces derniers sont très coûteux en termes de calcul et que les données codées obtenues sont très coûteuses à transmettre dans un flux destiné en particulier à être décodé. En outre, de tels procédés de codage ne tiennent pas compte du fait que les motifs holographiques comportent une dispersion d'informations initialement bien localisées dans le domaine spatial.

Objet et résumé de l'invention

Un des buts de l'invention est de remédier à des inconvénients de l'état de la technique précité.

A cet effet, selon un premier aspect, la présente invention concerne un procédé de codage d'au moins un motif holographique selon la revendication indépendante 1. Le procédé de codage selon l'invention est remarquable en ce qu'il met en oeuvre les étapes consistant à :

- déterminer à partir du signal lumineux, pour chaque point $x_j$, $1 \leq j \leq M$, du motif holographique, un ensemble de N rayons lumineux passant par le point précité et correspondant respectivement à N positions de visualisation différentes du motif,
- générer, à partir des M ensembles de N rayons lumineux déterminés, une pluralité de N vues en deux dimensions de l'objet correspondant respectivement aux N positions de visualisation du motif, par intersection, en chacune des positions de visualisation contenues dans un plan de visualisation parallèle à un plan contenant le motif holographique, de M rayons déterminés,
- agencer les N vues générées en une image multi-vues de l'objet, les N vues correspondant respectivement aux sous-images de l'image multi-vues,
- comprimer l'image multi-vues.

Grâce à une telle reconstitution du signal lumineux sous forme d'une pluralité de rayons dans le domaine spatial, au lieu d'une reconstruction dudit signal par application d'une transformée de Fresnel inverse, il est ainsi possible de réduire de façon non négligeable le temps et la complexité calculatoire du codage d'un motif holographique.

En outre, une telle reconstitution couplée à une exploitation des rayons sous forme d'une pluralité de vues représentant respectivement une pluralité de perspectives de la même scène 3D permet ainsi d'exploiter de façon optimale les multiples redondances spatiales et temporelles qui existent entre les différentes vues afin de coder efficacement le motif holographique.

En évitant d'inclure dans le signal codé à transmettre des informations de codage redondantes et donc inutiles à transmettre, il en résulte ainsi une diminution importante du coût de signalisation.

Selon un mode de réalisation particulier, l'étape de détermination consiste à démoduler en amplitude et en fréquence le signal lumineux, délivrant, pour chaque point $x_j$, $1 \leq j \leq M$, du motif holographique, un ensemble de N couples de données, les données d'un couple considéré étant associées respectivement à l'amplitude et la direction d'un rayon lumineux passant par un point considéré.

Une telle disposition permet d'optimiser sensiblement le coût de codage.

Selon un autre mode de réalisation particulier, la démodulation est effectuée par transformée de Gabor ou transformée en ondelettes.

De telles transformées ont pour avantage de localiser efficacement les fréquences spatiales associées à une position donnée dans l'hologramme.

Selon encore un autre mode de réalisation particulier, au cours de l'étape de génération des N vues, pour un point $x_j$ courant, $1 \leq j \leq M$, du motif holographique, le plan de visualisation est décomposé en une pluralité de N partitions, le centroïde de chaque partition correspondant au point d'intersection avec le plan de visualisation du rayon lumineux passant par le point $x_j$.

Une telle disposition a pour avantage d'associer à des amas de pixels la valeur de l'intensité d'un pixel de référence.

Selon une variante de cet autre mode de réalisation, au cours de l'étape de génération des N vues, pour un point $x'_j$ courant, $1 \leq j \leq M$, du motif holographique, le plan de visualisation est décomposé récursivement en quatre partitions, jusqu'à ce que chaque sous-partition résultant de la décomposition ne contienne qu'un seul centroïde, le centroïde de chaque sous-partition correspondant au point d'intersection avec le plan de visualisation du rayon lumineux passant par le point $x'_j$.

Une telle disposition a également pour avantage d'attribuer à des amas de pixels la valeur de l'intensité d'un pixel de référence.

Selon encore un autre mode de réalisation particulier, l'étape de compression met en oeuvre, pour l'image multi-vues, les sous-étapes de :

- prédiction de l'image multi-vues en fonction d'au moins une image multi-vues de référence précédemment codée puis décodée, délivrant une image multi-vues prédite,
- détermination de données résiduelles, par comparaison de données relatives à l'image multi-vues précitée avec des données relatives à l'image multi-vues prédite,
- transformée et quantification des données résiduelles déterminées,
- encodage des données résiduelles transformées et quantifiées.

Une telle disposition permet lors du codage d'optimiser l'élimination des redondances spatiales et temporelles entre les N vues de l'image multi-vues obtenue, en vue de réduire sensiblement le coût de codage.

Selon encore un autre mode de réalisation particulier, le codage est de type MVC.

Une telle disposition permet de d'appliquer à des motifs holographiques la technique de codage standard MVC (abréviation anglaise de « Multi-view coding ») dévolue jusqu'à maintenant au codage d'images multi-vues.

De façon correspondante, l'invention concerne un dispositif de codage selon la revendication indépendante 7 destiné à mettre en oeuvre le procédé de codage selon l'invention. Le dispositif de codage selon l'invention est donc destiné à coder au moins un motif holographique sur lequel est enregistré un signal lumineux représentatif de la lumière reçue par au moins un objet en perspective dans une scène.

Un tel dispositif de codage est remarquable en ce qu'il comprend des moyens de traitement qui sont aptes à :

- déterminer à partir du signal lumineux, pour chaque point $x_j$, $1 \leq j \leq M$, du motif holographique, un ensemble de N rayons lumineux passant par le point précité et correspondant respectivement à N positions de visualisation différentes dudit motif,
- générer, à partir des M ensembles de N rayons lumineux déterminés, une pluralité de N vues en deux dimensions de l'objet correspondant respectivement aux N positions de visualisation du motif, par intersection, en chacune des positions de visualisation contenues dans un plan de visualisation parallèle à un plan contenant le motif holographique, de M rayons déterminés,

- agencer les N vues générées en une image multi-vues de l'objet, les N vues correspondant respectivement aux sous-images de l'image multi-vues,
- compresser l'image multi-vues.

Selon un autre aspect, l'invention concerne un programme d'ordinateur comportant des instructions pour mettre en oeuvre le procédé de codage selon l'invention, lorsqu'il est exécuté sur un ordinateur.

L'invention vise également un programme d'ordinateur sur un support d'informations, ce programme comportant des instructions adaptées à la mise en oeuvre du procédé de codage selon l'invention, tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Le dispositif de codage et le programme d'ordinateur précité présentent au moins les mêmes avantages que ceux conférés par le procédé de codage selon la présente invention.

Brève description des dessins

D'autres caractéristiques et avantages apparaîtront à la lecture de plusieurs modes de réalisation préférés décrits en référence aux figures dans lesquelles:

- la figure 1 représente un exemple de motif holographique auquel est destiné à s'appliquer le procédé de codage selon l'invention,
- la figure 2 représente des étapes du procédé de codage selon l'invention,
- la figure 3 représente un mode de réalisation d'un dispositif de codage selon l'invention,
- la figure 4 est un schéma illustrant l'étape de génération d'une pluralité de vues mise en oeuvre dans le procédé de codage selon l'invention,
- la figure 5 est un schéma illustrant, pour une position de visualisation donnée du motif holographique, les rayons lumineux associés à cette position et interceptant le motif holographique,
- les figures 6A et 6B représentent respectivement deux modes de réalisation particuliers mettant en oeuvre une subdivision du plan de visualisation au cours de l'étape de génération d'une pluralité de vues mise en oeuvre dans le procédé de codage selon l'invention,
- la figure 7 représente schématiquement l'image multi-vues obtenue à partir de la pluralité de vues générées selon l'invention,
- la figure 8 représente schématiquement un mode de réalisation de reconstruction d'un motif holographique codé selon l'invention.

Description détaillée d'un mode de réalisation

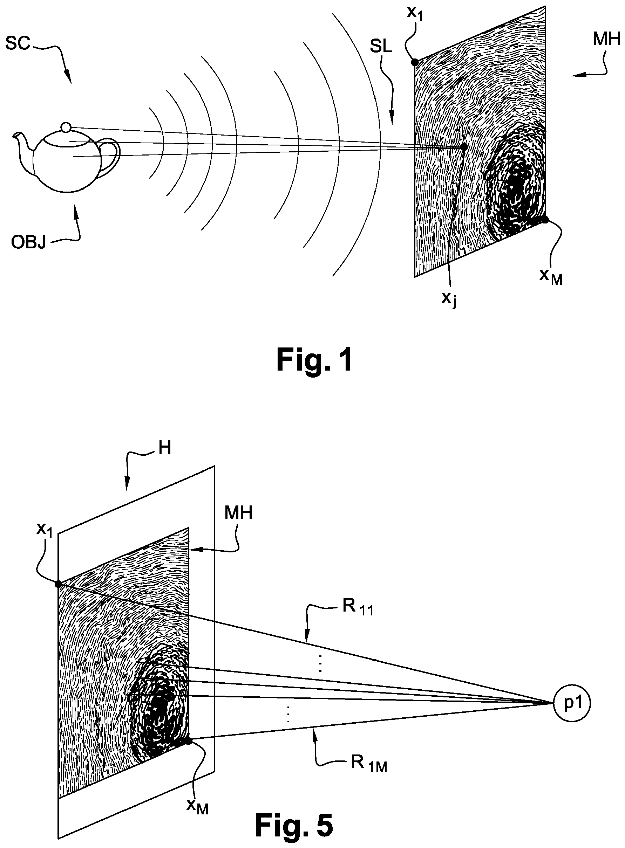

Un mode de réalisation de l'invention va maintenant être décrit, dans lequel le procédé de codage selon l'invention est utilisé pour coder un motif holographique courant MH tel que représenté sur la **figure 1,** sur lequel est enregistré un signal lumineux SL représentatif de la lumière reçue par au moins un objet OBJ en perspective dans une scène SC en trois dimensions. Dans l'exemple représenté, l'objet OBJ est une théière. De façon connue en tant que telle, le motif holographique MH contient une pluralité de points $x_1$, $x_2$,...,$x_j$,...,$x_M$, avec $1 \leq j \leq M$, qui sont obtenus à la suite d'une discrétisation selon un pas d'échantillonnage prédéterminé.

Le motif holographique MH peut être unique ou bien appartenir à un ensemble de motifs représentatifs du même objet et indexés par le temps, autrement dit une trame d'une vidéo holographique.

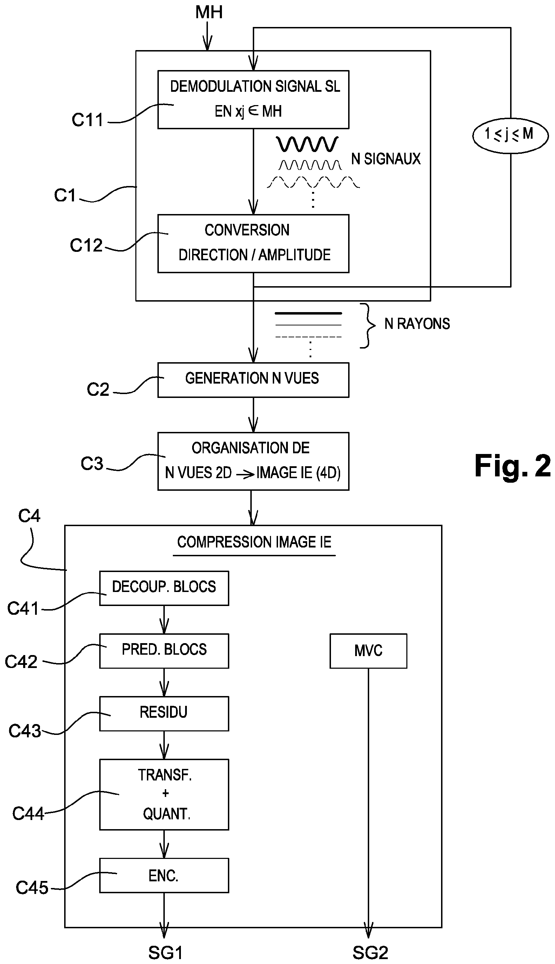

Le procédé de codage selon l'invention est représenté sous la forme d'un algorithme comportant des étapes C1 à C4 représentées à la **figure 2.**

Selon le mode de réalisation de l'invention, le procédé de codage selon l'invention est implémenté dans un dispositif de codage CO représenté à la **figure 2.**

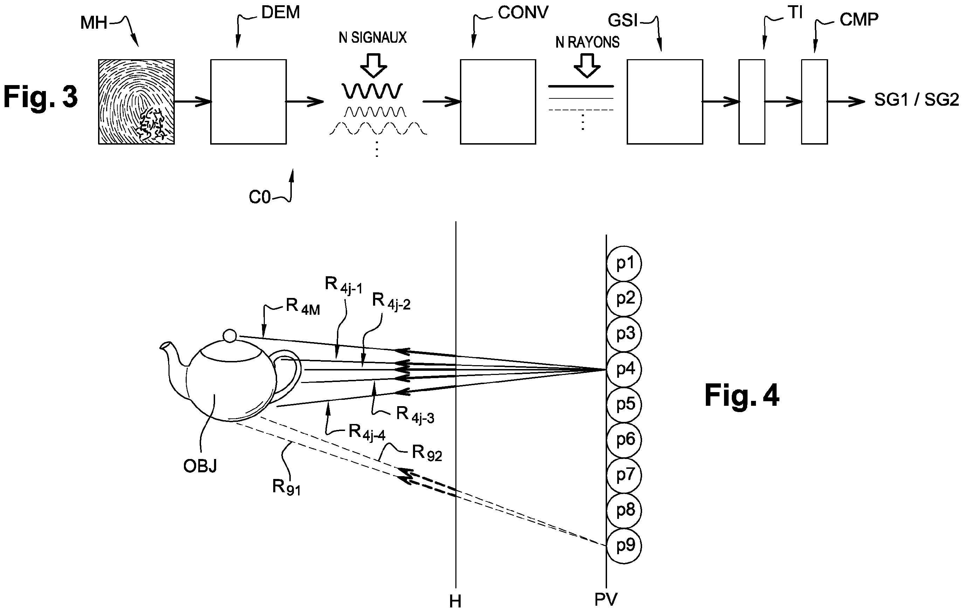

La première étape C1, représentée à la **figure 2,** est la détermination à partir dudit signal lumineux SL, pour chaque point $x_j$, $1 \leq j \leq M$, dudit motif holographique courant MH, d'un ensemble de N rayons lumineux passant par ledit point considéré et correspondant respectivement à N positions de visualisation angulaires différentes dudit motif. Une telle étape est mise en oeuvre par un module logiciel de démodulation DEM et un module logiciel de conversion CONV tels que représentés sur la **figure 3.**

En référence aux **figures 2** et **3,** l'étape de détermination C1 comprend une première sous-étape C11, au cours de laquelle le module de démodulation DEM procède à une démodulation en amplitude et en fréquence du signal lumineux SL, de façon à délivrer, pour chaque point $x_j$ $1 \leq j \leq M$, dudit motif holographique courant MH, un ensemble de N signaux d'amplitude et de fréquence spatiale orientée données. Dans un souci de clarté, seuls trois signaux parmi N sont représentés sur la **figure 3.**

Une telle démodulation peut être effectuée par exemple par transformée de Gabor, transformée en ondelettes, développement en série d'ondelettes, etc....

L'étape de détermination C1 comprend en outre une deuxième sous-étape C12, au cours de laquelle les N signaux obtenus sont convertis respectivement en N rayons d'amplitude et de direction données.

Selon le mode préféré de réalisation, la sous-étape de démodulation C11 met en oeuvre une transformée de Gabor. A cet effet, en chaque point $x_j$ ($1 \leq j \leq M$) dudit motif holographique courant MH, un filtrage de Gabor est appliqué dans un ensemble de directions 2D ($\theta_0$, ..., $\theta_N$). Un ensemble $S_j$ de N couples de données : amplitude, fréquence spatiale orientée est alors obtenu en chaque point $x_j$ $1 \leq j \leq M$, tel que $S_j = \{(a_{j1}, f_{j1}), (a_{j2}, f_{j2}) ..., (a_{jN}, f_{jN})\}$, lorsque les amplitudes sont supérieures à un seuil donné.

A l'issue de la sous-étape de démodulation C11, M ensembles $S_1$ à $S_M$ de couples de données dont obtenus.

La sous-étape de conversion C12 convertit ensuite chacun des M ensembles $S_1$ à $S_M$ en respectivement M ensembles $SC_1$ à $SC_M$ de couples de données : amplitude, direction 3D. Pour un point $x_j$ du motif holographique courant MH, l'ensemble $SC_j = \{(a_{j1}, d_{j1}), (a_{j2}, d_{j2}), ..., (a_{jN}, d_{jN})\}$ est obtenu selon l'équation $\sin(\alpha) = \lambda/f$, liant la fréquence spatiale f à la direction de diffraction $\alpha$ pour une onde plane incidente perpendiculairement à un plan contenant ledit motif holographique courant MH, $\alpha$ étant considérée dans le plan azimutal défini par ledit ensemble de directions 2D ($\theta_0$, ..., $\theta_N$).

A titre d'alternative, la sous-étape de démodulation C11 applique une transformée en ondelettes 2D en chaque point $x_j$ ($1 \leq j \leq M$) dudit motif holographique courant MH. A cet effet, on considère une ondelette génératrice $\varphi$ et la transformée $a_{jN} = \int \varphi^{\theta_k}(f_{jN} \cdot (x_c - T) MH(T) dT$, pour une discrétisation suffisante dudit ensemble de directions 2D ($\theta_0$, ..., $\theta_N$), avec $x_c$ un point courant du motif holographique MH et T une variable d'intégration. L'ondelette génératrice $\varphi$ peut être n'importe quelle fonction satisfaisant le critère d'admissibilité classique

$$\int_{\infty}^{+\infty} \frac{\left|\hat{\varphi}(x)\right|^2}{x} \, dx < \infty,$$

où $\hat{\varphi}$ désignant la transformée de Fourier de $\varphi$.

Au cours d'une étape C2 représentée à la **figure 2,** il est procédé, à partir des M ensembles $SC_1$ à $SC_M$ de couples de données obtenus à la sous-étape de conversion C12, à la génération de N vues en deux dimensions (2D) de l'objet OBJ. Une telle génération de vues est mise en oeuvre par un module logiciel de traitement GSI tel que représenté sur la **figure 3.**

A cet effet, comme représenté sur la **figure 4,** les N vues générées correspondent respectivement à ce que visualisent respectivement N observateurs situés respectivement selon N positions de visualisation angulaires différentes p1 à pN dudit motif holographique MH. De telles vues sont générées par intersection, en chacune desdites positions de visualisation contenues dans un même plan de visualisation PV parallèle au plan H contenant ledit motif holographique MH, de M rayons d'amplitude et de direction 3D déterminés à l'issue de la sous-étape C12. Dans l'exemple représenté, N=9, et par conséquent, neuf positions de visualisation p1 à p9 sont représentées. Dans un souci de clarté de la **figure 4,** seuls quelques rayons sont représentés uniquement en relation avec les positions de visualisation p4 et p9.

Comme représenté sur la **figure 5,** où pour des raisons de clarté, une seule position de visualisation est représentée, par exemple p1, M rayons $R_{11}$, $R_{12}$, ..., $R_{1M}$, interceptent le motif holographique MH contenu dans le plan H en M points $x_1$, $x_2$, ..., $x_M$ de ce motif.

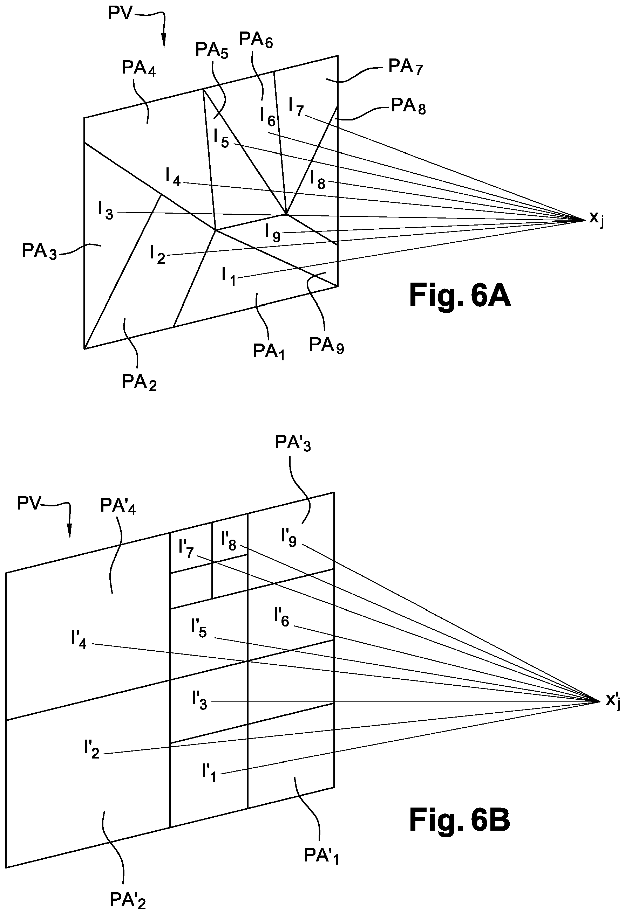

Selon un premier mode de réalisation tel que représenté sur la **figure 6A,** au cours de l'étape C2 de génération des N vues, pour un point $x_j$ courant, $1 \leq j \leq M$, dudit motif holographique MH, le plan de visualisation PV est décomposé selon un diagramme de Voronoï en une pluralité de N partitions $PA_1$ à $PA_N$, le centroïde de chaque partition correspondant au point d'intersection avec le plan de visualisation PV d'un rayon lumineux de direction et d'amplitude donnés, passant par le point $x_j$. Dans l'exemple représenté où N=9, $I_1$ à $I_g$ représentent les neuf intersections des neuf rayons $R_{1j}$, $R_{2j}$, ..., $R_{9j}$ issus du point $x_j$ et ayant chacun une direction donnée. Chaque partition $PA_1$ à $PA_N$ est associée à l'amplitude des N rayons $R_{1j}$, $R_{2j}$, ..., $R_{Nj}$.

Selon un deuxième mode de réalisation tel que représenté sur la **figure 6B,** au cours de l'étape C2 de génération des N vues, pour un point $x'_j$ courant, $1 \leq j \leq M$, dudit motif holographique MH, le plan de visualisation PV est subdivisé récursivement en quatre partitions $PA'_1$ à $PA'_4$ jusqu'à ce que chaque sous-partition issue de ladite décomposition ne contienne qu'un seul centroïde, le centroïde de chaque sous-partition correspondant au point d'intersection avec le plan de visualisation du rayon lumineux passant par le point $x'_j$. Dans l'exemple représenté où N=9, $I'_1$ à $I'_9$ représentent les neuf intersections des neuf rayons $R'_{1j}$, $R'_{2j}$, ..., $R'_{9j}$ issus du point $x'_j$ et ayant chacun une direction donnée. Chacune des N sous-partitions obtenues est associée à l'amplitude des N rayons $R'_{1j}$, $R'_{2j}$, ..., $R'_{Nj}$.

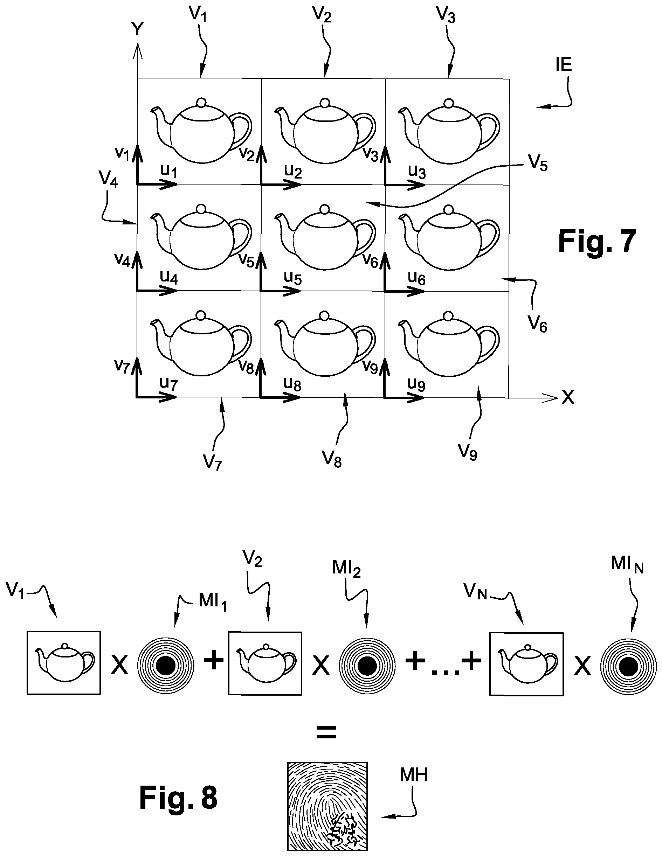

Au cours d'une étape suivante C3 représentée à la **figure 1,** les N vues générées sont organisées en une seule image IE multi-vues, selon un parcours prédéterminé. Une telle étape est effectuée par un module logiciel TI de traitement d'images tel que représenté à la **figure 3.** Un exemple d'une telle image IE est représenté sur la **figure 7.** Dans l'exemple représenté, N=9. L'image IE contenue dans un repère (X, Y) comprend neuf vues $V_1$ à Vg du même objet OBJ, qui sont contenues respectivement dans un repère ($u_1, v_1$) à ($u_N, v_N$). Les vues $V_1$ à $V_9$ correspondent respectivement aux positions de visualisation p1 à p9 telles que représentées à la **figure 4** et sont par exemple organisées à la suite les unes des autres selon un trajet par exemple en zigzag.

Au cours d'une étape suivante C4 représentée à la **figure 2,** l'image IE multi-vues générée est comprimée.

Une telle étape est mise en oeuvre par un module logiciel de compression CMP représenté sur la **figure 3.**

Une telle compression est fiable et précise, puisque compte tenu de l'agencement particulier des N vues qui composent l'image IE multi-vues, ladite compression exploite les redondances tant spatiales que temporelles entre les N vues générées.

Selon un premier mode de réalisation représenté sur la **figure 2,** ladite étape de compression C4 met en oeuvre un codage prédictif par blocs de l'image IE multi-vues, selon un schéma similaire à celui du codage prédictif d'images en deux dimensions tel que défini dans le standard H.264. Ainsi, l'image IE multi-vues peut être codée en Intra (en tant qu'image I) ou bien en Inter. Dans le cas où l'image IE est codée en Inter, elle peut être codée :

- soit en tant qu'image P, c'est-à-dire prédite de façon classique par rapport à une image multi-vues déjà codée, puis décodée,
- soit en tant qu'image B (bi-directionnelle), c'est-à-dire prédite par rapport à une ou plusieurs images passées et futures.

A cet effet, l'étape de compression C4 comprend les sous-étapes décrites ci-dessous.

Au cours d'une sous-étape C41 représentée à la **figure 2,** il est procédé au découpage de l'image courante IE multi-vues en une pluralité de blocs de pixels. La dimension de chacun des blocs est d'ordre 4, dans le repère (X, Y, u, v) représenté sur la **figure 7.**

Au cours d'une sous-étape C42 représentée à la **figure 2,** il est procédé à la prédiction de chacun des blocs de l'image multi-vues courante en fonction respectivement de un ou plusieurs blocs de référence d'une image multi-vues de référence, c'est à dire précédemment codée puis décodée. Il est ainsi obtenu une pluralité de blocs prédits.

Au cours d'une sous-étape C43 représentée à la **figure 2,** il est procédé à la détermination de données résiduelles par comparaison des données relatives à chaque bloc courant avec respectivement les données relatives à chaque bloc prédit.

Au cours d'une sous-étape C44 représentée à la **figure 2,** il est procédé à la transformée et quantification des données résiduelles déterminées précédemment. La transformée appliquée est par exemple une transformée en cosinus discrète (DCT).

Au cours d'une sous-étape C45 représentée à la **figure 2,** il est procédé à l'encodage desdites données résiduelles quantifiées.

Selon un deuxième mode de réalisation représenté sur la **figure 2,** ladite étape de compression C4 met en oeuvre un codage multi-vues de l'image IE multi-vues. De façon connue en soi, un tel codage est effectué par un algorithme MVC (MPEG-4 multiview-coding).

A l'issue de l'étape de compression C4, un signal vidéo codé SG1 (codage prédictif par blocs) ou SG2 (codage MVC) est produit. Ledit signal est stocké ou bien transmis à un décodeur (non représenté).

Le procédé de codage qui vient d'être décrit ci-dessus est réitéré pour une pluralité de motifs holographiques appartenant à une trame déterminée.

Dans le cas où le signal codé SG1 ou SG2 est transmis à un décodeur, ce dernier est adapté pour reconstituer ledit nombre N de vues, à partir des données encodées contenues dans le signal SG1 ou SG2.

Selon un premier mode de réalisation représenté à la **figure 8,** les N vues reconstruites $V_1$ à $V_N$ sont modulées respectivement avec N motifs d'interférences $MI_1$ à $MI_N$ calculés préalablement. Les vues ainsi modulées sont ensuite superposées pour reconstituer le motif holographique initial MH. Une telle méthode est par exemple décrite dans le document : Wendy Plesniak, Michael Halle, V. Michael Bove Jr., James Barabas, Ravikanth Pappu, "Reconfigurable image projection holograms", Optical Engineering 45(11), 115801 (November 2006).

A titre d'alternative, les N vues reconstruites $V_1$ à $V_N$ sont respectivement transformées en N fronts d'onde élémentaires au moyen d'une transformée de Fourier. Lesdits N fronts d'onde sont ensuite transportés par transformée de Fresnel dans un même plan pour reconstituer le motif holographique initial MH. Une telle méthode est par exemple décrite dans le document : K. Yamamoto, T. Senoh, R. Oi, T. Kurita, "8K4K-size Computer Generated Hologram for 3D Visual System Using Rendering Technology", Universal Communication Symposium (IUCS), 2010 4th International, Oct. 2010, pp. 193 - 196.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de codage d'au moins un motif holographique résultant de l'enregistrement d'un front d'onde lumineux représentatif de la lumière émanant d'au moins un objet en perspective dans une scène, ledit procédé étant **caractérisé en ce qu'**il met en oeuvre les étapes consistant à :

   - déterminer (C1), pour chaque point $x_j$ du motif holographique, avec $1 \leq j \leq M$, un ensemble de N rayons lumineux passant par ledit point $x_j$ et correspondant respectivement à la diffraction selon N directions de visualisation différentes dudit motif, d'une onde plane incidente perpendiculairement à un plan contenant ledit motif holographique,

   - générer (C2), à partir des M ensembles de N rayons lumineux déterminés, une pluralité de N vues en deux dimensions dudit objet correspondant respectivement auxdites N positions de visualisation dudit motif, par intersection, en chacune desdites positions de visualisation contenues dans un plan de visualisation parallèle au plan contenant ledit motif holographique, de M rayons déterminés,

- agencer spatialement (C3) lesdites N vues générées en une image multi-vues dudit objet,
- comprimer (C4) ladite image multi-vues, ladite étape de compression mettant en oeuvre, des sous-étapes de :

    - prédiction (C42) de ladite image multi-vues en fonction d'au moins une image multi-vues de référence précédemment codée puis décodée, délivrant une image multi-vues prédite,
    - détermination (C43) de données résiduelles, par comparaison de données relatives à ladite image multi-vues avec des données relatives à ladite image multi-vues prédite,
    - transformée et quantification (C44) des données résiduelles déterminées, et
    - encodage (C45) des données résiduelles transformées et quantifiées.

2. Procédé de codage selon la revendication 1, au cours duquel ladite étape de détermination consiste à démoduler (C11) en amplitude et en fréquence ledit signal lumineux, délivrant, pour chaque point $x_j$, $1 \leq j \leq M$, dudit motif holographique, un ensemble de N couples de données, les données d'un couple considéré étant associées (C12) respectivement à l'amplitude et la direction d'un rayon lumineux passant par ledit point.

3. Procédé de codage selon la revendication 2, au cours duquel la démodulation est effectuée par transformée de Gabor ou transformée en ondelettes.

4. Procédé de codage selon la revendication 1, dans lequel au cours de ladite étape de génération desdites N vues, pour un point $x_j$ courant, $1 \leq j \leq M$, dudit motif holographique, le plan de visualisation est décomposé en une pluralité de N partitions, le centroïde de chaque partition correspondant au point d'intersection avec le plan de visualisation du rayon lumineux passant par le point $x_j$.

5. Procédé de codage selon la revendication 1, dans lequel au cours de ladite étape de génération desdites N vues, pour un point $x'_j$ courant, $1 \leq j \leq M$, dudit motif holographique, le plan de visualisation est décomposé récursivement en quatre partitions, jusqu'à ce que chaque sous-partition issue de ladite décomposition ne contienne qu'un seul centroïde, le centroïde de chaque partition correspondant au point d'intersection avec le plan de visualisation du rayon lumineux passant par le point $x'_j$.

6. Procédé de codage selon la revendication 1, au cours duquel le codage est de type MVC.

7. Dispositif de codage destiné à mettre en oeuvre le procédé de codage selon l'une quelconque des revendications 1 à 6, ledit dispositif étant **caractérisé en ce qu'**il comprend des moyens de traitement qui sont aptes à :

    - déterminer, pour chaque point $x_j$ dudit motif holographique, avec $1 \leq j \leq M$, un ensemble de N rayons lumineux passant par le point $x_j$ et correspondant respectivement à la diffraction selon N directions de visualisation différentes dudit motif, d'une onde plane incidente perpendiculairement à un plan contenant ledit motif holographique,
    - générer, à partir des M ensembles de N rayons lumineux déterminés, d'une pluralité de N vues en deux dimensions dudit objet correspondant respectivement auxdites N positions de visualisation dudit motif, par intersection, en chacune desdites positions de visualisation contenues dans un plan de visualisation (PV) parallèle au plan (H) contenant ledit motif holographique, de M rayons déterminés,
    - agencer spatialement lesdites N vues générées en une image multi-vues dudit objet,
    - compresser ladite image multi-vues, lesdits moyens de traitements aptes à compresser ladite image multi-vues mettant en oeuvre des moyens de :

        - prédiction de ladite image multi-vues en fonction d'au moins une image multi-vues de référence précédemment codée puis décodée, délivrant une image multi-vues prédite,
        - détermination de données résiduelles, par comparaison de données relatives à ladite image multi-vues avec des données relatives à ladite image multi-vues prédite,
        - transformée et quantification des données résiduelles déterminées, et
        - encodage des données résiduelles transformées et quantifiées.

8. Programme d'ordinateur comportant des instructions pour mettre en oeuvre le procédé de codage selon l'une quelconque des revendications 1 à 6, lorsqu'il est exécuté sur un ordinateur.

9. Support d'enregistrement lisible par un ordinateur sur lequel est enregistré un programme d'ordinateur comprenant des instructions pour l'exécution des étapes du procédé de codage selon l'une quelconque des revendications 1 à 6, lorsque ledit programme est exécuté par un ordinateur.

**Patentansprüche**

1.  Verfahren zur Codierung wenigstens eines holografischen Musters, das aus der Aufzeichnung einer Lichtwellenfront resultiert, die für das Licht repräsentativ ist, das von wenigstens einem Objekt in der Perspektive in einer Szene ausgeht, wobei das Verfahren **dadurch gekennzeichnet ist, dass** es die folgenden Schritte durchführt:

    - Bestimmen (C1), für jeden Punkt $x_j$ des holografischen Musters, mit $1 \leq j \leq M$, einer Menge von N Lichtstrahlen, die durch den Punkt $x_j$ verlaufen und der Beugung einer ebenen Welle, die senkrecht zu einer das holografische Muster enthaltenden Ebene einfällt, in jeweils einer von N verschiedenen Betrachtungsrichtungen des Musters entsprechen,
    - Erzeugen (C2), aus den M Mengen von N bestimmten Lichtstrahlen, einer Vielzahl von N zweidimensionalen Ansichten des Objekts, die jeweils einer der N Betrachtungspositionen des Musters entsprechen, durch Schneiden, in jeder der Betrachtungspositionen, die in einer zu der das holografische Muster enthaltenden Ebene parallelen Betrachtungsebene enthalten sind, von M bestimmten Strahlen,
    - räumliches Anordnen (C3) der N erzeugten Ansichten in einem Mehrfachansichtsbild des Objekts,
    - Komprimieren (C4) des Mehrfachansichtsbildes, wobei dieser Kompressionsschritt folgende Teilschritte durchführt:

        - Vorhersage (C42) des Mehrfachansichtsbildes in Abhängigkeit von wenigstens einem Referenz-Mehrfachansichtsbild, das zuvor codiert und anschließend decodiert wurde, was ein vorhergesagtes Mehrfachansichtsbild liefert,
        - Bestimmung (C43) von Restdaten durch Vergleich von Daten, die das Mehrfachansichtsbild betreffen, mit Daten, die das vorhergesagte Mehrfachansichtsbild betreffen,
        - Transformation und Quantifizierung (C44) der bestimmten Restdaten, und
        - Codierung (C45) der transformierten und quantifizierten Restdaten.

2.  Verfahren zur Codierung nach Anspruch 1, in welchem der Schritt des Bestimmens darin besteht, eine Amplituden- und Frequenzdemodulation (C11) des Lichtsignals durchzuführen, was für jeden Punkt $x_j$, $1 \leq j \leq M$, des holografischen Musters eine Menge von N Datenpaaren liefert, wobei die Daten eines betrachteten Paares der Amplitude bzw. der Richtung eines durch diesen Punkt verlaufenden Lichtstrahls zugeordnet werden (C12).

3.  Verfahren zur Codierung nach Anspruch 2, in welchem die Demodulation durch Gabor-Transformation oder Wavelet-Transformation durchgeführt wird.

4.  Verfahren zur Codierung nach Anspruch 1, wobei im Schritt des Erzeugens der N Ansichten für einen aktuellen Punkt $x_j$, $1 \leq j \leq M$, des holografischen Musters die Betrachtungsebene in eine Vielzahl von N Teilbereichen zerlegt wird, wobei der Zentroid jedes Teilbereichs dem Schnittpunkt des durch den Punkt $x_j$ verlaufenden Lichtstrahls mit der Betrachtungsebene entspricht.

5.  Verfahren zur Codierung nach Anspruch 1, wobei im Schritt des Erzeugens der N Ansichten für einen aktuellen Punkt $x'_j$, $1 \leq j \leq M$, des holografischen Musters die Betrachtungsebene rekursiv in vier Teilbereiche zerlegt wird, so lange, bis jeder aus dieser Zerlegung hervorgegangene Teilbereich nur einen einzigen Zentroid enthält, wobei der Zentroid jedes Teilbereichs dem Schnittpunkt des durch den Punkt $x'_j$ verlaufenden Lichtstrahls mit der Betrachtungsebene entspricht.

6.  Verfahren zur Codierung nach Anspruch 1, in welchem die Codierung vom Typ MVC ist.

7.  Vorrichtung zur Codierung, die dazu bestimmt ist, das Verfahren zur Codierung nach einem der Ansprüche 1 bis 6 durchzuführen, wobei die Vorrichtung **dadurch gekennzeichnet ist, dass** sie Verarbeitungsmittel umfasst, welche in der Lage sind zum:

    - Bestimmen, für jeden Punkt $x_j$ des holografischen Musters, mit $1 \leq j \leq M$, einer Menge von N Lichtstrahlen, die durch den Punkt $x_j$ verlaufen und der Beugung einer ebenen Welle, die senkrecht zu einer das holografische Muster enthaltenden Ebene einfällt, in jeweils einer von N verschiedenen Betrachtungsrichtungen des Musters entsprechen,
    - Erzeugen, aus den M Mengen von N bestimmten Lichtstrahlen, einer Vielzahl von N zweidimensionalen Ansichten des Objekts, die jeweils einer der N Betrachtungspositionen des Musters entsprechen, durch Schneiden, in jeder der Betrachtungspositionen, die in einer zu der das holografische Muster enthaltenden Ebene (H) parallelen Betrachtungsebene (PV) enthalten sind, von M bestimmten Strahlen,
    - räumlichen Anordnen der N erzeugten Ansichten in einem Mehrfachansichtsbild des Objekts,
    - Komprimieren des Mehrfachansichtsbildes, wobei die Verarbeitungsmittel, die in der Lage sind, das Mehrfachansichtsbild zu komprimieren, Mittel einsetzen zur:

- Vorhersage des Mehrfachansichtsbildes in Abhängigkeit von wenigstens einem Referenz-Mehrfachansichtsbild, das zuvor codiert und anschließend decodiert wurde, was ein vorhergesagtes Mehrfachansichtsbild liefert,
- Bestimmung von Restdaten durch Vergleich von Daten, die das Mehrfachansichtsbild betreffen, mit Daten, die das vorhergesagte Mehrfachansichtsbild betreffen,
- Transformation und Quantifizierung der bestimmten Restdaten, und
- Codierung der transformierten und quantifizierten Restdaten.

**8.** Computerprogramm, welches Anweisungen zur Durchführung des Verfahrens zur Codierung nach einem der Ansprüche 1 bis 6, wenn es auf einem Computer ausgeführt wird, umfasst.

**9.** Computerlesbares Aufzeichnungsmedium, auf welchem ein Computerprogramm aufgezeichnet ist, das Anweisungen zur Ausführung der Schritte des Verfahrens zur Codierung nach einem der Ansprüche 1 bis 6, wenn das Programm von einem Computer ausgeführt wird, umfasst.

**Claims**

**1.** Method for coding at least one holographic pattern resulting from the recording of a luminous wavefront representative of the light emanating from at least one object in perspective in a scene, said method being **characterized in that** it implements the steps consisting in:

- determining (C1), for each point $x_j$ of the holographic pattern, with $1{\leq}j{\leq}M$, a set of N light rays passing through said point $x_j$ and corresponding respectively to the diffraction according to N different directions of viewing of said pattern, of a plane wave incident perpendicularly to a plane containing said holographic pattern,
- generating (C2), on the basis of the M sets of N light rays determined, a plurality of N two-dimensional views of said object corresponding respectively to said N viewing positions for said pattern, by intersection, at each of said viewing positions contained in a viewing plane parallel to the plane containing said holographic pattern, of M determined rays,
- spatially arranging (C3) said N views generated as a multi-view image of said object,
- compressing (C4) said multi-view image, said compression step implementing, sub-steps of:

- prediction (C42) of said multi-view image as a function of at least one reference multi-view image previously coded and then decoded, delivering a predicted multi-view image,
- determination (C43) of residual data, by comparing data relating to said multi-view image with data relating to said predicted multi-view image,
- transform and quantization (C44) of the residual data determined, and
- encoding (C45) of the transformed and quantized residual data.

**2.** Coding method according to Claim 1, in the course of which said determination step consists in demodulating (C11) in amplitude and in frequency said luminous signal, delivering, for each point $x_j$, $1{\leq}j{\leq}M$, of said holographic pattern, a set of N pairs of data, the data of a considered pair being associated (C12) respectively with the amplitude and the direction of a light ray passing through said point.

**3.** Coding method according to Claim 2, in the course of which the demodulation is performed by Gabor transform or wavelet transform.

**4.** Coding method according to Claim 1, in which in the course of said step of generating said N views, for a current point $x_j$, $1{\leq}j{\leq}M$, of said holographic pattern, the viewing plane is decomposed into a plurality of N partitions, the centroid of each partition corresponding to the point of intersection with the plane of viewing of the light ray passing through the point $x_j$.

**5.** Coding method according to Claim 1, in which in the course of said step of generating said N views, for a current point $x'_j$ $1{\leq}j{\leq}M$, of said holographic pattern, the viewing plane is recursively decomposed into four partitions, until each sub-partition arising from said decomposition contains only a single centroid, the centroid of each partition corresponding to the point of intersection with the plane of viewing of the light ray passing through the point $x'_j$.

**6.** Coding method according to Claim 1, in the course of which the coding is of MVC type.

**7.** Coding device intended to implement the coding method according to any one of Claims 1 to 6, said device being **characterized in that** it comprises processing means which are able to:

- determine, for each point $x_j$ of said holographic pattern, with $1{\leq}j{\leq}M$, a set of N light rays passing through the point $x_j$ and corresponding respectively to the diffraction according to N different directions of viewing of said pattern, of a plane wave incident perpendicularly to a plane containing said holographic pattern,

- generate, on the basis of the M sets of N light rays determined, of a plurality of N two-dimensional views of said object corresponding respectively to said N viewing positions for said pattern, by intersection, at each of said viewing positions contained in a viewing plane (PV) parallel to the plane (H) containing said holographic pattern, of M determined rays,
- spatially arrange said N views generated as a multi-view image of said object,
- compress said multi-view image, said processing means able to compress said multi-view image implementing means for:

    - predicting said multi-view image as a function of at least one reference multi-view image previously coded and then decoded, delivering a predicted multi-view image,
    - determining residual data, by comparing data relating to said multi-view image with data relating to said predicted multi-view image,
    - transforming and quantizing the residual data determined, and
    - encoding the transformed and quantized residual data.

8. Computer program comprising instructions for implementing the coding method according to any one of Claims 1 to 6, when it is executed on a computer.

9. Recording medium readable by a computer on which is recorded a computer program comprising instructions for the execution of the steps of the coding method according to any one of Claims 1 to 6, when said program is executed by a computer.

**Fig. 1**

**Fig. 5**

**Fig. 2**

**Fig. 3**

MH

DEM

N SIGNAUX

CONV

GSI

N RAYONS

TI

CMP

C0

SG1 / SG2

$R_{4M}$

$R_{4j-1}$

$R_{4j-2}$

$R_{4j-3}$

$R_{4j-4}$

$R_{92}$

$R_{91}$

OBJ

p1
p2
p3
p4
p5
p6
p7
p8
p9

H

PV

**Fig. 4**

EP 2 815 281 B1

13

PV

PA$_4$   PA$_5$   PA$_6$   PA$_7$

PA$_8$

I$_6$   I$_7$

I$_5$

I$_4$   I$_8$

I$_3$

PA$_3$   I$_2$   I$_9$

I$_1$

PA$_1$   PA$_9$

PA$_2$

x$_j$

**Fig. 6A**

PA'$_3$

PV   PA'$_4$

I'$_7$   I'$_8$   I'$_9$

I'$_5$   I'$_6$

I'$_4$

I'$_3$

I'$_2$

I'$_1$

x'$_j$

PA'$_1$

PA'$_2$

**Fig. 6B**

Fig. 7

Fig. 8

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

## Littérature non-brevet citée dans la description

- **E. DARAKIS ; T. NAUGHTON.** Compression of Digital Hologram Sequence Using MPEG-4. *Proc. SPIE,* 2009, vol. 7358
- **M. LIEBLING ; M. UNSER.** Fresnelets : New Multiresolution Wavelet Bases for Digital Holography. *IEEE Trans. Image Processing,* Janvier 2003, vol. 12 (1
- **WENDY PLESNIAK ; MICHAEL HALLE ; V. MICHAEL BOVE JR. ; JAMES BARABAS ; RAVIKANTH PAPPU.** Reconfigurable image projection holograms. *Optical Engineering,* Novembre 2006, vol. 45 (11), 115801
- **K. YAMAMOTO ; T. SENOH ; R. OI ; T. KURITA.** 8K4K-size Computer Generated Hologram for 3D Visual System Using Rendering Technology. *Universal Communication Symposium (IUCS), 2010 4th International,* Octobre 2010, 193-196